(19) Europäisches Patentamt
European Patent Office
Office européen des brevets

(11) Veröffentlichungsnummer: **0 110 168**
**B1**

(12) # EUROPÄISCHE PATENTSCHRIFT

(45) Veröffentlichungstag der Patentschrift: **08.10.86**

(51) Int. Cl.[4]: **A 01 N 43/76** // (A01N43/76, 39:02)

(21) Anmeldenummer: **83110859.2**

(22) Anmeldetag: **29.10.83**

(54) **Herbizide Mittel.**

(30) Priorität: **04.11.82 DE 3240694**

(43) Veröffentlichungstag der Anmeldung: **13.06.84 Patentblatt 84/24**

(45) Bekanntmachung des Hinweises auf die Patenterteilung: **08.10.86 Patentblatt 86/41**

(84) Benannte Vertragsstaaten: **AT BE DE FR GB IT NL**

(56) Entgegenhaltungen: **DE - A - 2 745 869**

(73) Patentinhaber: **HOECHST AKTIENGESELLSCHAFT, Postfach 80 03 20, D-6230 Frankfurt am Main 80 (DE)**

(72) Erfinder: **Schumacher, Hans, Dr., Claudiusstrasse 4, D-6093 Flörsheim am Main (DE)**
Erfinder: **Heinrich, Rudolf, Dr., Taunusstrasse 19, D-6233 Kelkheim (Taunus) (DE)**
Erfinder: **Marks, Hans-Günter, Spindelstrasse 9, D-6234 Hattersheim am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 110 168 B1

**Beschreibung**

Gegenstand der vorliegenden Erfindung sind herbizide Mittel, die gekennzeichnet sind durch eine Verbindung der Formel (I), (I)

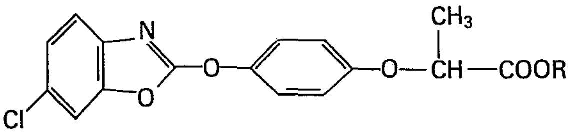

worin R = H, ($C_1$–$C_4$)-Alkyl oder ein Kationäquivalent einer Base bedeutet, in Kombination mit einer Verbindung der Formel (II) (II)

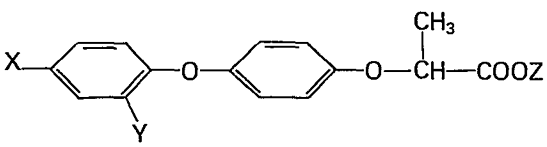

worin X = Cl oder Br, Y = H oder Cl und Z = ($C_1$–$C_4$)-Alkyl bedeuten, wobei, im Falle X = Br, Y = Cl sein muss.

Bevorzugt unter den Verbindungen der Formel I ist diejenige mit R = $C_2H_5$; bevorzugt unter den Verbindungen der Formel II ist diejenige mit X und Y = Cl und Z = $CH_3$.

Die Verbindungen der Formel I werden in der DE-A-2640730, die Verbindungen der Formel II in der DE-A-2223894 beschrieben.

Die Verbindungen der Formeln I und II besitzen ein asymmetrisches Kohlenstoffzentrum und können daher als reine Stereoisomere (Enantiomere) oder als Gemische von Enantiomeren vorliegen.

Als Kationenäquivalente für die Reste R der Formel I kommen insbesondere Alkalikationen wie $Na^+$, $K^+$, Erdalkalikationen wie $Mg^{2+}$, $Ca^{2+}$ oder ggf. substituierte Ammoniumionen in Betracht.

Die Verbindungen beider Formeln I und II eignen sich zur Bekämpfung von Gräsern in dikotylen Kulturen (z.B. Bohnen, Zuckerrüben, Raps) und in Getreide-Kulturen.

Die Verbindungen der Formel I sind dabei besonders stark wirksam gegen Hirsearten, z.B. Setaria sp., Echinochloa sp., Sorghum sp. und andere; dagegen werden Weidelgräser (Lolium sp.) nicht geschädigt.

Neben der Wirkung gegen Hirsearten zeigen Verbindungen der Formel II hohe Wirksamkeit gegen Lolium sp. und gegen Flughafer (Avena sp).

Bei Versuchen, beide Wirkstoffe zur Erweiterung des Wirkungsspektrums zu kombinieren, zeigte sich überraschenderweise eine auffallende synergistische Wirkung.

Die erfindungsgemässen Wirkstoffkombinationen können zur Bekämpfung unerwünschter Gräser wie beispielsweise Avena sp., Setaria sp., Alopecurus myosuroides, Brachiaria sp., Digitaria sp., Echinochloa sp., Eleusine indica, Lolium sp., Panicum sp., Zea mais, Sorghum sp. in Kulturen wie z.B. Weizen, Rüben, Raps, Flachs, Sonnenblumen, Zwiebeln, Kartoffeln, Bohnen, Erbsen, Luzerne und anderen Leguminosen eingesetzt werden.

Die Gewichtsverhältnisse der Komponenten I und II in den erfindungsgemässen Kombinationen können innerhalb weiter Grenzen schwanken, wobei das Verhältnis I:II im Bereich von 15:1 bis 1:15 variieren kann; es liegt insbesondere im Bereich von 5:1 bis 1:10, besonders bevorzugt im Bereich von 1:2 bis 1:10.

Die erfindungsgemässen Kombinationen können entweder als Tankmischungen, bei denen die einzelnen Wirkstoffkomponenten erst unmittelbar vor der Applikation miteinander vermischt werden, oder als Fertigformulierungen zur Anwendung gebracht werden. Als Fertigmischungen können sie z.B. in Form von benetzbaren Pulvern, emulgierbaren Konzentraten, Lösungen, Dispersionen, Stäubemitteln oder Granulaten formuliert sein und enthalten dann gegebenenfalls die üblichen Formulierungshilfsmittel, wie Netz-, Haft-, Emulgier-, Dispergiermittel, feste oder flüssige Inertstoffe, Mahlhilfsmittel und Lösungsmittel.

Benetzbare Pulver sind in Wasser gleichmässig dispergierbare Präparate, die neben dem Wirkstoff ausser gegebenenfalls Verdünnungs- bzw. Inertstoffen noch Netzmittel, z.B. polyoxethylierte Alkylphenole, polyoxethylierte Oleyl- oder Stearylamine, Alkyl- oder Alkylphenylsulfonate und Dispergiermittel, z.B. ligninsulfonsaures Natrium, 2,2′-dinaphthyl-methan-6,6′-disulfonsaures Natrium, dibutylnaphthalinsulfonsaures Natrium oder auch oleylmethyltaurinsaures Natrium enthalten können.

Emulgierbare Konzentrate können beispielsweise durch Auflösen des Wirkstoffes in einem organischen Lösungsmittel, z.B. Butanol, Cyclohexanon, Dimethylformamid, Xylol, Isophoron oder auch höhersiedenden Aromaten unter Zusatz von einem oder mehreren Emulgatoren hergestellt werden. Als Emulgatoren können beispielsweise verwendet werden: Alkylarylsulfonsaure Calciumsalze, Fettsäurepolyglykolester, Alkylarylpolyglykolether, Fettalkoholpolyglykolether, polyoxethylierte Oleyl- oder Stearylamine, Propylenoxid-Ethylenoxid-Kondensationsprodukte, Alkylpolyether, Sorbitan-Fettsäureester, Alkylaryl-Propylenoxid-Ethylenoxid-Kondensationsprodukte u.a.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen einer Lösung des Wirkstoffes auf adsorptionsfähiges, granuliertes Inertmaterial hergestellt werden oder durch Aufbringen von Wirkstoffkonzentraten mittels eines Bindemittels, z.B. Polyvinylalkohol, polyacrylsaurem Natrium, Methylhydroxyethylcellulose oder auch Mineralölen auf die Oberfläche von Trägerstoffen, wie Sand, Kaolinite, oder von granuliertem Inertmaterial. Auch können geeignete Wirkstofformulierungen in der für die Herstellung von Düngemittelgranulaten üblichen Weise – gewünschtenfalls in Mischung mit Düngemitteln – hergestellt werden.

Die erfindungsgemässen synergistischen Wirkstoffmischungen aus Verbindungen der Formeln I und II können in Form üblicher Zubereitungen, insbesondere als benetzbare Pulver, emulgierbare Konzentrate, Lösungen, Dispersionen, Stäubemittel oder Granulate formuliert werden. Der Gesamtwirkstoffgehalt der marktfähigen Formulierungen beträgt dann ca. 2 bis 95 Gew.-%, vorzugsweise 10 bis 70 Gew.-%, wobei der Rest zu 100 Gew.-% aus üblichen Formulierungshilfsmitteln, wie Haft-, Netz-, Emulgier-, Dispergier-, Füll-, Lösungsmitteln und Trägerstoffen besteht.

In benetzbaren Pulvern variiert die Gesamt-Wirkstoffkonzentration im Bereich von etwa 10 bis 70 Gew.-%, wobei die Konzentrationen der Einzelkomponenten I bzw. II je nach dem Verhältnis der Komponenten I und II zwischen 3 und 50 Gew.-% betragen können. Der Rest zu 100 Gew.-% besteht aus üblichen Formulierungshilfsmitteln. Bei emulgierbaren Konzentraten liegt die Gesamtwirkstoffkonzentration im Bereich von etwa 10 bis 70 Gew.-%, wobei je nach dem Verhältnis der Komponenten I und II die Konzentration der Komponente I zwischen 3 und 30 Gew.-% und die Konzentration der Komponente II zwischen 3 und 40 Gew.-% variieren kann. Bei Granulaten beträgt sie etwa 2 bis 10 Gew.-%. Staubförmige Formulierungen enthalten etwa 5 bis 20 Gew.-% an Wirkstoffgemisch.

Gegenstand der Erfindung sind daher auch herbizide Mittel mit einem Gehalt von 2 bis 95 Gew.-%, vorzugsweise 10 bis 70 Gew.-% an einer Wirkstoffkombination aus Verbindungen der Formeln I und II, wobei der Rest zu 100 Gew.-% aus üblichen Formulierungshilfsmitteln besteht.

Zur Anwendung werden die genannten Konzentrate gegebenenfalls in üblicher Weise verdünnt, z.B. benetzbare Pulver, emulgierbare Konzentrate und Dispersionen mittels Wasser. Staubförmige und granulierte Zubereitungen sowie versprühbare Lösungen werden vor der Anwendung im allgemeinen nicht mehr mit weiteren inerten Stoffen verdünnt. Mit den äusseren Bedingungen, wie Temperatur, Feuchtigkeit u.a. variiert auch die erforderliche Aufwandmenge an den erfindungsgemässen Mitteln. Sie kann sich innerhalb weiter Grenzen bewegen und beträgt im allgemeinen zwischen 0,2 und 10 kg/ha Wirkstoffkombination, vorzugsweise 0,3–1,5 kg/ha.

Die Erfindung wird durch die nachfolgenden Beispiele näher erläutert.

A. Formulierungsbeispiele

Beispiele 1–6: Herstellung von emulgierbaren Konzentraten

Allgemeine Vorschrift:

Die Komponente I wird in dem betreffenden Lösungsmittelgemisch bei 60–70 °C gelöst und anschliessend die geschmolzene Komponente II zugegeben. Unter gutem Rühren setzt man die einzelnen Emulgatorkomponenten zu und lässt erkalten. Die emulgierbaren Konzentrate sind leicht bis mässig braun gefärbt.

Nach dieser Verfahrensweise werden die in den Beispielen 1–6 der nachfolgenden Tabelle angegebenen Komponenten und Formulierungshilfsmittel miteinander vermischt. Die Zahlenangaben in der Tabelle entsprechen Gewichtsteilen.

| Beispiel 1–6: | (1) | (2) | (3) | (4) | (5) | (6) |
|---|---|---|---|---|---|---|
| Verhältnis: I zu II | 1:1 | 1:2 | 1:5 | 1:10 | 2:1 | 5:1 |
| Komponente I | 120 | 100 | 50 | 25 | 160 | 200 |
| Komponente II | 120 | 200 | 250 | 250 | 80 | 40 |
| Xylol | 420 | 500 | 500 | 500 | 400 | 300 |
| Isophoron | 200 | 110 | – | 100 | – | – |
| Cyclohexanon | – | – | 100 | – | – | – |
| Dimethylformamid | – | – | – | – | 200 | 350 |
| Dodecylbenzolsulfonsaures Calcium | 40 | 50 | 50 | 40 | 60 | 40 |
| Ethoxyliertes Rizinusöl (40 AeO) | 70 | – | – | 60 | 50 | 40 |
| Ethoxyliertes Nonylphenol (10 AeO) | – | 40 | – | – | – | – |
| Ethoxyliertes Tributylphenol (12 AeO) | – | – | 50 | – | – | 30 |
| Ethoxylierter Oleylalkohol (15 AeO) | 30 | – | – | 25 | 50 | – |

Beispiele 7 und 8: Herstellung von Spritzpulvern

Beispiel 7

Komponente I und Komponente II (1:2)

Ein in Wasser leicht dispergierbares, benetzbares Pulver wird erhalten, indem man

100 Gew.-Teile Komponente I
200 Gew.-Teile Komponente II
500 Gew.-Teile basisches Aluminiumsilikat (Kaolinit)
80 Gew.-Teile ligninsulfonsaures Kalium
40 Gew.-Teile oleylmethyltaurinsaures Natrium

in einem Trommelmischer gut mischt und anschliessend auf einer Stiftmühle einmal bei 3000 upm zerkleinert. Das dabei anfallende Mahlgut wird erneut gemischt und einmal bei 12000 upm gemahlen.

Beispiel 8

Komponente I und Komponente II (1:5)

Ein in Wasser leicht dispergierbares, benetzbares Pulver wird erhalten aus:

50 Gew.-Teilen Komponente I
250 Gew.-Teilen Komponente II

350 Gew.-Teilen synthetischer Kieselsäure
80 Gew.-Teilen ligninsulfonsaurem Kalium
50 Gew.-Teilen Polyarylsulfonat (Na-Salz)
50 Gew.-Teilen oleylmethyltaurinsaurem Natrium
40 Gew.-Teilen Polyvinylalkohol
130 Gew.-Teilen basischem Aluminiumsilikat

Der geschmolzene Wirkstoff der Komponente II wird in einem Trommelmischer an der synthetischen Kieselsäure adsorbiert, anschliessend mit den übrigen Formulierungsbestandteilen gut gemischt, auf einer Stiftmühle einmal bei 3000 upm und anschliessend einmal bei 12000 upm gemahlen.

B. Biologische Beispiele

In den folgenden biologischen Beispielen wird zur Beurteilung des synergistischen Effekts unterschieden zwischen dem aus den Wirkungen der Einzelanwendung der Wirkstoffkomponenten errechneten additiven Wirkungsgrad und dem experimentell gefundenen Wirkungsgrad der Wirkstoffkombinationen.

Die Errechnung des additiven Wirkungsgrades erfolgt nach der Formel von S. R. Colby (vgl. Calculating synergistic and antagonistic responses of herbicide combinations in Weeds, 15, 1967, S. 20–22).

Diese Formel lautet:

$$E = X + Y - \frac{X \cdot Y}{100}$$

wobei
X = % Schädigung durch Herbizid I bei X kg/ha Aufwandmenge,
Y = % Schädigung durch Herbizid II bei Y kg/ha Aufwandmenge,
E = die erwartete Schädigung der Herbizide I und II bei X + Y kg/ha Aufwandmenge
bedeuten.

Ist die tatsächliche Schädigung grösser als berechnet, so ist die Wirkung der Kombination mehr als additiv, d.h. es liegt ein synergistischer Effekt vor.

Die biologischen Ergebnisse wurden erarbeitet mit den Ungräsern Avena fatua, Lolium multiflorum, Alopecurus myosuroides und Setaria lutescens und den Kulturpflanzen Vicia faba und Triticum aestivum.

Die Pflanzen wurden in mit Erde gefüllten Neubauerschalen im Gewächshaus angezogen und im 3–4 Blattstadium mit den Einzelwirkstoffen sowie den erfindungsgemässen Wirkstoffkombinationen in 300 l Wasser/ha gespritzt. Die Bonitur wurde 4 Wochen später vorgenommen und die Schädigung (Wirkung) in % im Vergleich zur unbehandelten Kontrolle ausgedrückt.

In den folgenden Tabellen I–III sind die Ergebnisse wiedergegeben, wobei die nach der Formel von Colby zu erwartenden Werte in () gesetzt sind.

Wie die biologischen Ergebnisse der Tabellen I–III zeigen, werden die nach Colby errechneten herbiziden Wirkungen durch die erfindungsgemässen Kombinationen deutlich übertroffen, während die Kulturpflanzen nicht geschädigt werden.

Tabelle I

Schädigung in % (Wirkung)

| Verbindung der Formel I | Wirkstoffdosis g/ha | Avena fatua | Lolium multiflorum | Alopecurus myosuroides | Setaria lutescens |
|---|---|---|---|---|---|
| A | 10 | 0 | 6 | 7 | 15 |
| | 15 | 6 | 9 | 7 | 44 |
| | 20 | 11 | 9 | 10 | 63 |
| | 30 | 19 | 12 | 13 | 67 |
| | 50 | 32 | 13 | 15 | 89 |
| | 60 | 38 | 22 | 20 | 93 |
| | 75 | 52 | 26 | 21 | 93 |
| | 100 | 60 | 26 | 27 | 93 |
| | 120 | 67 | 27 | 31 | 96 |
| | 150 | 70 | 27 | 37 | 98 |

A = 2-[4-(6-Chlor-benzoxazol-2-yloxy)-phenoxy]-propionsäure-ethylester

Tabelle II

Schädigung in % (Wirkung)

| Verbindung der Formel II | Wirkstoffdosis g/ha | Avena fatua | Lolium multiflorum | Alopecurus myosuroides | Setaria lutescens |
|---|---|---|---|---|---|
| B | 10 | 0 | 21 | 2 | 7 |
| | 15 | 0 | 23 | 7 | 9 |
| | 20 | 0 | 27 | 8 | 13 |
| | 30 | 7 | 28 | 8 | 19 |
| | 50 | 7 | 50 | 8 | 53 |
| | 60 | 9 | 52 | 11 | 59 |
| | 100 | 9 | 64 | 15 | 66 |
| | 150 | 13 | 70 | 20 | 70 |

B = 2-[4-(2,4-Dichlor-phenoxy)-phenoxy]-propionsäure-methylester

Tabelle III

Schädigung in % (Wirkung)

| Verbindungen der Formeln I und II | Wirkstoffdosis g/ha | Avena fatua | Lolium multiflorum | Alopecurus myosuroides | Setaria lutescens | Vicia faba | Triticum aestivum |
|---|---|---|---|---|---|---|---|
| A+B | 20+20 | – | – | – | 87 (66) | 0 | 0 |
| (Gew.-Verhältnis | 30+30 | – | – | – | 91 (74) | 0 | 0 |
| 1:1) | 50+50 | 68 (37) | 65 (57) | 62 (22) | – | 0 | 0 |
| | 100+100 | 76 (64) | 84 (74) | 68 (38) | – | 0 | 0 |
| | 150+150 | 95 (74) | 99 (79) | 83 (50) | – | 0 | 0 |
| A+B | 15+30 | – | – | – | 91 (55) | 0 | 0 |
| (Gew. Verhältnis | 30+60 | 63 (27) | 67 (58) | 51 (23) | 97 (77) | 0 | 0 |
| 1:2) | 50+100 | 68 (39) | 79 (69) | 68 (28) | – | 0 | 0 |
| | 75+150 | 90 (59) | 96 (73) | 87 (37) | – | 0 | 0 |
| A+B | 10+50 | – | – | – | 87 (61) | 0 | 0 |
| (Gew.-Verhältnis | 20+100 | 52 (20) | 75 (68) | 61 (24) | 92 (88) | 0 | 0 |
| 1:5) | 30+150 | 62 (30) | 86 (74) | 73 (31) | – | 0 | 0 |
| A+B | 10+100 | – | – | – | 84 (72) | 0 | 0 |
| (Gew.-Verhältnis | 15+150 | 65 (19) | 80 (73) | 67 (26) | 97 (26) | 0 | 0 |
| 1:10) | | | | | | | |
| A+B | 20+10 | – | – | – | 93 (66) | 0 | 0 |
| (Gew.-Verhältnis | 30+15 | – | – | – | 95 (70) | 0 | 0 |
| 2:1) | 60+30 | 72 (43) | 53 (44) | 61 (27) | – | 0 | 0 |
| | 120+60 | 95 (70) | 86 (65) | 82 (39) | – | 0 | 5 |
| A+B | 50+10 | – | – | – | 98 (90) | 0 | 0 |
| (Gew.-Verhältnis | 75+15 | – | – | – | 100 (94) | 0 | 0 |
| 5:1) | 100+20 | 73 (60) | 55 (46) | 54 (33) | – | 0 | 3 |
| | 150+30 | 90 (73) | 76 (48) | 85 (43) | – | 0 | 6 |

**Patentansprüche**

1. Herbizide Mittel, gekennzeichnet durch einen Gehalt an einer Verbindung der Formel (I),

(I)

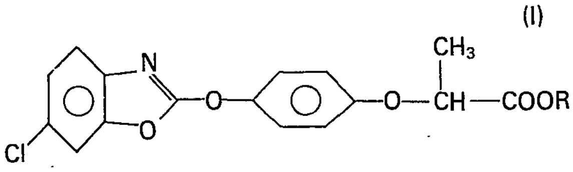

worin R = H, ($C_1$–$C_4$)-Alkyl oder ein Kationäquivalent bedeutet, in Kombination mit einer Verbindung der Formel (II),

(II)

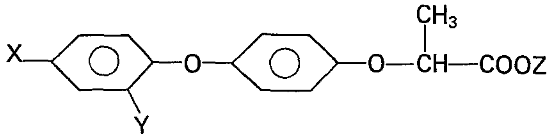

worin
X = Cl oder Br
Y = H oder Cl und
Z = ($C_1$–$C_4$)-Alkyl bedeuten, wobei im Falle
X = Br, Y = Cl sein muss.

2. Herbizide Mittel gemäss Anspruch 1, dadurch gekennzeichnet, dass R in Formel I Ethyl bedeutet sowie in Formel II X und Y = Cl und Z = Methyl bedeuten.

3. Herbizide Mittel gemäss Ansprüchen 1 und 2, dadurch gekennzeichnet, dass das Mischungsverhältnis der Verbindung der Formel I zur Verbindung der Formel II im Bereich zwischen 15:1 und 1:15 liegt.

4. Herbizide Mittel gemäss Ansprüchen 1 bis 3, dadurch gekennzeichnet, dass das Mischungsverhältnis der Verbindung der Formel I zur Verbindung der Formel II im Bereich zwischen 5:1 und 1:10 liegt.

5. Herbizide Mittel gemäss Ansprüchen 1 bis 4, dadurch gekennzeichnet, dass das Mischungsverhältnis der Verbindung der Formel I zur Verbindung der Formel II zwischen 1:2 und 1:10 liegt.

6. Verwendung der Mittel gemäss Ansprüchen 1–5 zur Bekämpfung von unerwünschtem Pflanzenwuchs in Nutzpflanzenkulturen.

7. Verfahren zur Bekämpfung von Schadpflanzen in Nutzpflanzenkulturen, dadurch gekennzeichnet, dass man auf diese bzw. die Anbauflächen ein Mittel gemäss Ansprüchen 1–5 aufbringt.

**Claims**

1. A herbicidal agent which contains a compound of the formula (I) (I)

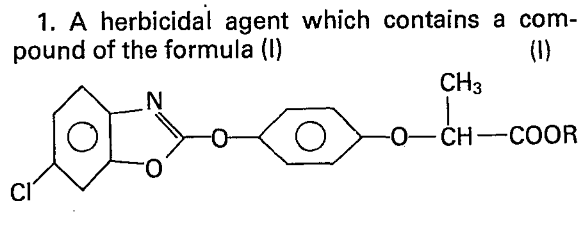

wherein R denotes H, ($C_1$–$C_4$)-alkyl or one cation equivalent, in combination with a compound of the formula (II)

(II)

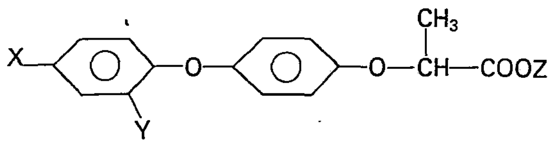

wherein
X denotes Cl or Br,
Y denotes H or Cl and
Z denotes ($C_1$–$C_4$)-alkyl, and if
X is Br, Y must be Cl.

2. A herbicidal agent as claimed in claim 1, wherein R in formula I denotes ethyl and, in formula II, X and Y denote Cl and Z denotes methyl.

3. A herbicidal agent as claimed in claims 1 and 2, wherein the mixing ratio of the compound of the formula I to the compound of the formula II is in a range between 15:1 and 1:15.

4. A herbicidal agent as claimed in claims 1 to 3, wherein the mixing ratio of the compound of the formula I to the compound of the formula II is in a range between 5:1 and 1:10.

5. A herbicidal agent as claimed in claims 1 to 4, wherein the mixing ratio of the compound of the formula I to the compound of the formula II is between 1:2 and 1:10.

6. Use of an agent as claimed in claims 1–5 for controlling undesirable plant growth in crops.

7. A method of controlling weeds in crops, wherein an agent as claimed in claim 1–5 is applied onto these or onto the cultivated areas.

**Revendications**

1. Produits herbicides caractérisés en ce qu'ils contiennent un composé répondant à la formule I:

(I)

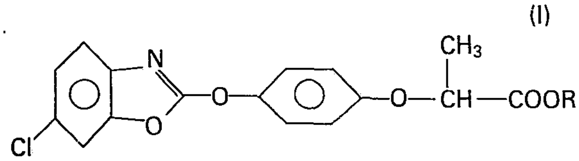

dans laquelle R représente l'hydrogène, un alkyle en $C_1$–$C_4$ ou un équivalent cationique, associé à un composé répondant à la formule II:

(II)

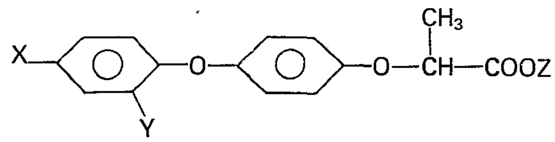

dans laquelle X représente Cl ou Br, Y représente H ou Cl et Z représente un alkyle en $C_1$–$C_4$, le symbole Y représentant obligatoirement Cl dans le cas où X représente Br.

2. Produits herbicides selon la revendication 1, caractérisés en ce que, dans la formule I, R représente un radical éthyle et, dans la formule II, X et Y représentent chacun Cl et Z représente un radical méthyle.

3. Produits herbicides selon l'une des revendications 1 et 2, caractérisés en ce que le rapport entre la quantité du composé de formule I et celle du composé de formule II, dans le mélange, est compris entre 15:1 et 1:15.

4. Produits herbicides selon l'une quelconque des revendications 1 à 3, caractérisés en ce que le rapport entre la quantité du composé de formule I et celle du composé de formule II, dans le mélange, est compris entre 5:1 et 1:10.

5. Produits herbicides selon l'une quelconque des revendications 1 à 4, caractérisés en ce que le rapport entre la quantité du composé de formule I et celle du composé de formule II, dans le mélange, est compris entre 1:2 et 1:10.

6. Application des produits selon l'une quelconque des revendications 1 à 5 pour la lutte contre la végétation indésirable dans des cultures de plantes utiles.

7. Procédé pour combattre des plantes nuisibles dans des cultures de plantes utiles, procédé caractérisé en ce qu'on applique sur celles-ci, ou sur les surfaces cultivées, un produit selon l'une quelconque des revendications 1 à 5.